(19) **Europäisches Patentamt**

**European Patent Office**

**Office européen des brevets**

(11) **EP 0 970 390 B1**

(12) **EUROPÄISCHE PATENTSCHRIFT**

(45) Veröffentlichungstag und Bekanntmachung des Hinweises auf die Patenterteilung:
**12.09.2001 Patentblatt 2001/37**

(51) Int Cl.$^7$: **G01S 15/93**

(21) Anmeldenummer: **98913725.2**

(86) Internationale Anmeldenummer:
**PCT/EP98/01548**

(22) Anmeldetag: **18.03.1998**

(87) Internationale Veröffentlichungsnummer:
**WO 98/43111 (01.10.1998 Gazette 1998/39)**

(54) **VERFAHREN ZUR BESTIMMUNG DES SENKRECHTEN ABSTANDES ZWISCHEN EINEM OBJEKT UND EINER SICH ÖRTLICH VERÄNDERNDEN EINRICHTUNG**

METHOD FOR DETERMINING THE VERTICAL DISTANCE BETWEEN AN OBJECT AND A DEVICE WITH A VARIABLE POSITION

PROCEDE DE DETERMINATION DE L'ECART VERTICAL ENTRE UN OBJET ET UN DISPOSITIF A POSITION VARIABLE

(84) Benannte Vertragsstaaten:
**DE FR GB**

(30) Priorität: **20.03.1997 DE 19711467**

(43) Veröffentlichungstag der Anmeldung:
**12.01.2000 Patentblatt 2000/02**

(73) Patentinhaber: **Mannesmann VDO Aktiengesellschaft 60388 Frankfurt am Main (DE)**

(72) Erfinder:
• **FLEISCHHAUER, Norbert D-65760 Eschborn (DE)**
• **HASSLER, Gregor D-65520 Bad Camberg (DE)**

(74) Vertreter: **Klein, Thomas, Dipl.-Ing. Mannesmann VDO AG Kruppstrasse 105 60388 Frankfurt am Main (DE)**

(56) Entgegenhaltungen:
**WO-A-92/01954     DE-A- 3 341 022**

EP 0 970 390 B1

**Beschreibung**

Die Erfindung betrifft ein Verfahren zur Bestimmung des senkrechten Abstandes zwischen einem Objekt und einer sich örtlich verändernden Einrichtung, insbesondere eines Kraftfahrzeuges, gemäß dem Oberbegriff des Patentanspruchs 1.

Um das Rückwärtsfahren zu erleichtern, und Zusammenstöße mit parkenden Wagen oder anderen im Weg stehenden Gegenständen zu verhindem, ist es bekannt, an der Rückseite des Kraftfahrzeuges Sensoren vorzusehen, welche beispielsweise Ultraschall- oder Radarsignale aussenden und die von dem Hindernis reflektierte Strahlung wieder empfangen. Dabei wird der Abstand zwischen dem am Kraftfahrzeug angeordneten Sensor und dem Hindernis aus der Laufzeit des Signals vom Sensor zum Hindernis und wieder zurück bestimmt.

Dieses Verfahren hat den Nachteil, daß nur eine Aussage über den Abstand als solchen zwischen Sensor und Objekt möglich ist. Eine Angabe des senkrechten Abstandes zwischen Hindernis und Kraftfahrzeug (auf der Basis des am Kraftfahrzeug angeordneten Sensors) scheitert aber an der Mehrdeutigkeit, welche durch die möglichen Positionen des Hindernisses hervorgerufen werden, die dieses mit dem gleichen Sensor - Hindernis - Abstand einnehmen kann.

Aus der WO 92/01954 ist eine Kollisions-Warneinrichtung bekannt, welche eine Einrichtung zur berührungslosen Abstandsmessung aufweist, die mindestens zwei Ultraschallsensoren in einem vorgegebenem Abstand enthält Mit Hilfe einer Steuereinrichtung werden die Laufzeiten zwischen dem Aussenden jeweils eines Ultraschallsignals und dem Empfangen eines von dem Hindernis reflektierten Ultralschallsignals des jeweils gleichen und des jeweils anderen Ultraschallsensors ausgewertet.
Durch Umwelteinflüsse kann es aber zu fehlerhaften Meßergebnissen kommen.

Der Erfindung liegt somit die Aufgabe zugrunde, ein Verfahren zur Bestimmung des senkrechten Abstandes des Objektes von einem Kraftfahrzeug anzugeben, welches gegenüber Umwelteinflüssen unempfindlich ist.

Erfindungsgemäß wird die Aufgabe dadurch gelöst, daß der Abstand zwischen Objekt und der sich örtlich veränderten Einrichtung nur dann bestimmt wird, wenn sich das Objekt in einem Sensorkorridor befindet, welcher zwischen dem ersten und dem zweiten Sensor aufgespannt ist.

Der Vorteil der Erfindung besteht darin, daß durch Aussonderung von Umwelteinflüssen neben der zuverlässigen Bestimmung des senkrechten Abstandes eine zuverlässige Unterscheidung zwischen imaginären und realen Hindernissen aufgrund der zusätzlichen Information der indirekten Messung möglich ist.

In einer Weiterbildung sendet der zweite Sensor ein Signal aus, das vom Objekt reflektiert wird und empfängt dieses reflektierte Signal (direkte Messung), wobei aus der Laufzeit dieses Signals die möglichen Positionen des Objektes mit dem gleichen Abstand zum zweiten Sensor bestimmt werden.

Nur dort, wo alle direkten und indirekten Messungen die Position eines Objektes angeben, existiert ein reales Hindernis.

In einer Ausgestaltung werden zunächst in einer direkten Messung alle möglichen Positionen des Objektes zum zweiten Sensor bestimmt und anschließend in einer indirekten Messung die Strecke zwischen ersten Sensor, Objekt und zweiten Sensor bestimmt.

Um Mehrdeutigkeiten zu unterbinden, wird der senkrechte Abstand des Objektes von der sich örtlich verändernden Einrichtung für die Position des Objektes bestimmt, die sowohl mit der indirekten Messung des ersten Sensors als auch mit der direkten und indirekten Messung des zweiten Sensors erfaßt wurden.

In einer Weiterbildung wird bei Anwesenheit von mehreren Sensoren an der sich örtlich verändernden Einrichtung die direkte und indirekte Messung immer durch zwei Sensoren durchgeführt und die so ermittelten möglichen Positionen des Objektes miteinander verglichen. Der Sensorkorridor wird dabei zwischen den, die aktuelle Messung ausführenden Sensoren aufgespannt.

Da die Sensoren unterschiedliche Entfernungen voneinander aufweisen, werden bei der paarweisen Messung der Sensoren unterschiedlich breite Sensorkorridore aufgespannt. Es können somit unterschiedlich positionierte Objekte bzw. Hindernisse geortet werden.

Bei der Erfassung von mehreren Objekten mit unterschiedlichen Abstänzu der sich örtlich ändernden Einrichtung, wird das Objekt mit dem minimalen Abstand bestimmt und der minimale senkrechte Abstand berechnet und abgespeichert.

In einer Weiterbildung wird der minimale Abstand des Objektes mit dem minimalen direkten Abstand des von einem Randsensor erfaßten Objektes verglichen und der kleinere dieser beiden Abstände als der minimale Abstand zum nächsten Objekt bestimmt. Dadurch werden die Bereiche jenseits der Randsensoren, die durch die Sensorkorridore nicht abgedeckt sind, miterfaßt.

Um nur tatsächlich vorhandene Hindernisse zu erfassen, wird jede Laufzeitmessung mehrfach durchgeführt und ein erfaßtes Objekt nur dann weiter betrachtet, wenn es bei allen Messungen erfaßt wurde. Vor jeder ersten indirekten Messung müssen alle Sensoren einmal ein Signal ausgesendet haben.

Die Erfindung läßt zahlreiche Ausführungsbeispiele zu. Eines soll anhand der in der Zeichnung dargestellten Figuren näher erläutert werden. Es zeigt

Figur 1:    Anordnung zur Bestimmung des Abstandes zwischen einem Hindernis und einem Kraftfahrzeug

Figur 2: Verfahren zur Arbeitsweise der Anordnung gemäß Figur 1

Figur 3: Direkte und indirekte Messung bei zwei Sensoren

Figur 4: Bestimmung der Laufstrecke bei der indirekten Messung

Figur 5: Sensorkorridore

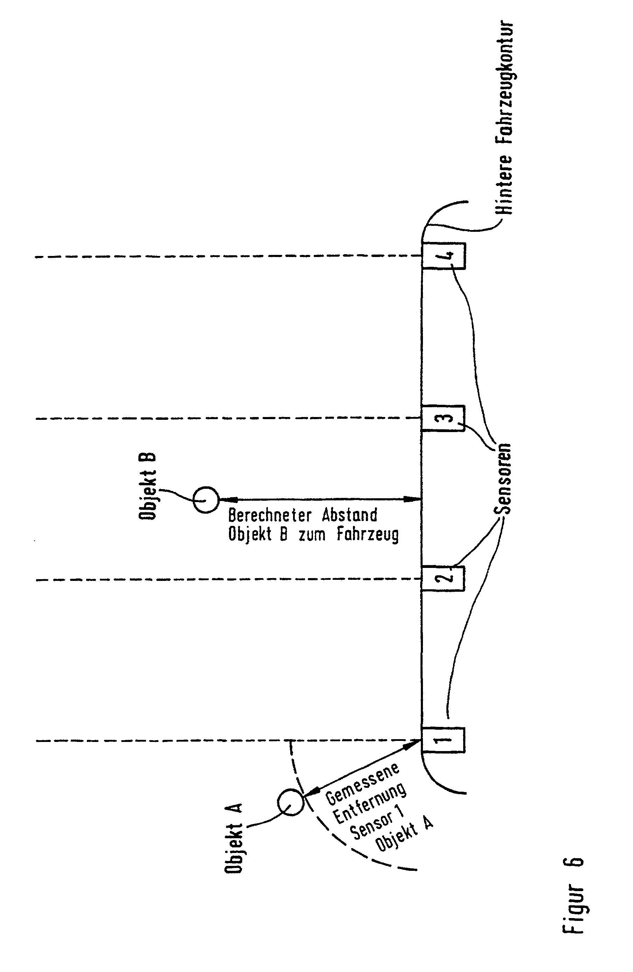

Figur 6: Betrachtung des Randbereiches eines Fahrzeuges

Figur 7: Direkte und indirekte Messung im Randbereich

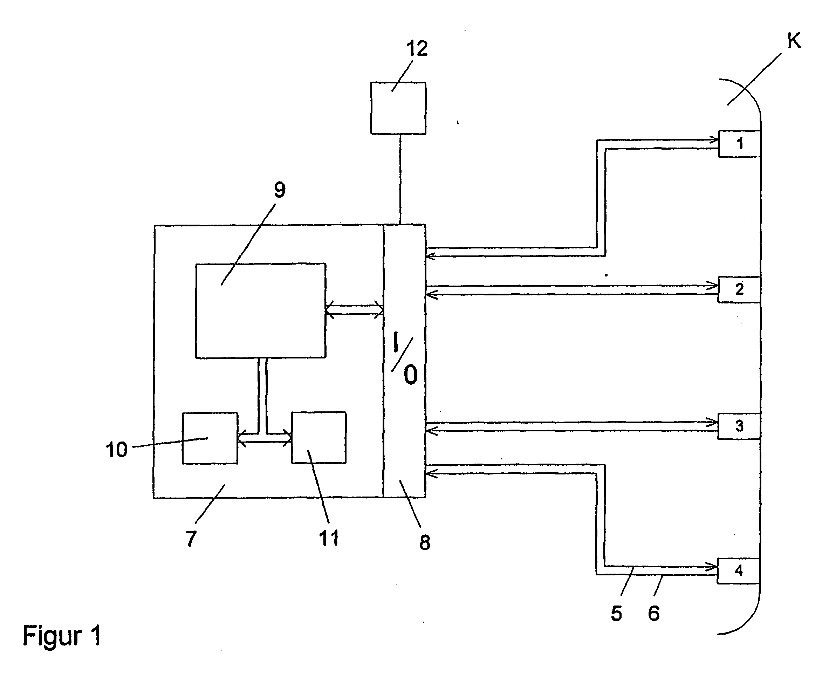

Gemäß Figur 1 sind an der rückseitigen Stoßstange eines Kraftfahrzeuges K vier Ultraschallgeber 1, 2, 3, 4 in gleichmäßigen Abständen angeordnet, die als Rückfahr- und Einparkhilfe genutzt werden.

Die verwendeten piezoelektrischen Ultraschallgeber 1, 2, 3, 4 dienen sowohl als Sender als auch als Empfänger. Eine Steuereinheit 7, welche vorzugsweise ein Mikroprozessor ist, ist über Sende- 5 und Empfangsleitungen 6 mit jedem der Ultraschallgeber 1, 2, 3, 4 verbunden. Der Mikroprozessor weist dabei eine Ein- und Ausgabeeinheit 8, eine zentrale Recheneinheit 9 sowie einen Arbeitsspeicher 10 und einen Festwertspeicher 11 auf.

Der Mikroprozessor 7 erzeugt elektrische Impulse mit einer Frequenz von ungefähr 40 KHz, die über die Leitung 5 an den jeweiligen Ultraschallgeber 1, 2, 3, 4 weitergeleitet und dort in entsprechende Ultraschallimpulse umgewandelt werden. Die vom Objekt A reflektierten Ultraschallsignale (Echos) werden von den Ultraschallempfängern 1, 2, 3 bzw. 4 empfangen und als elektrisches Signal über die Leitung 6 an die Steuereinheit 7 geleitet. Die Steuereinheit 7 mißt mit Hilfe ihres internen, nicht weiter dargestellten Taktgebers, die Laufzeit zwischen der Aussendung des elektrischen Impulses und dem Empfang des elektrischen Impulses vom Ultraschallgeber und speichert diese im Arbeitsspeicher 11 ab.

Üblicherweise wird aus der Laufzeit t des Ultraschallsignals der Abstand s zwischen dem Kraftfahrzeug (Sensor) und dem Hindernis A nach der bekannten Gleichung

$$s = \tfrac{1}{2} \times c \times t$$

bestimmt, wobei c die Schallgeschwindigkeit darstellt.

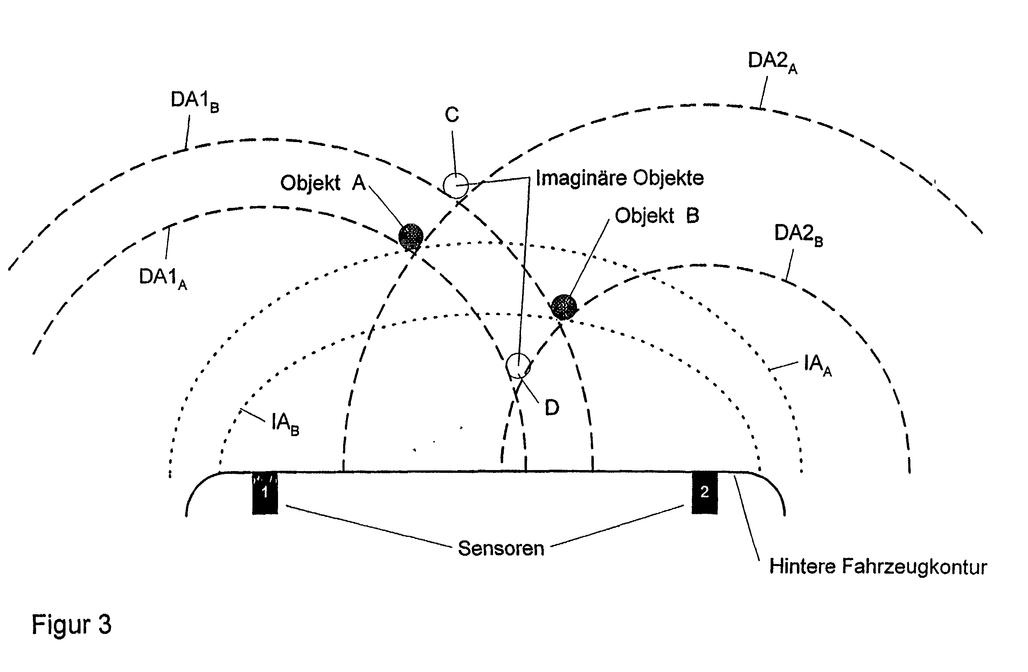

Bei dieser direkten Messung ist nur eine Aussage über den Abstand zwischen Sensor und Objekt möglich. Eine Angabe des senkrechten Abstandes zwischen Objekt und dem Kraftfahrzeug K, an dem sich der Sensor befindet, scheitert an der Mehrdeutigkeit hervorgerufen durch die möglichen Positionen des Objektes. Denn es existieren beliebig viele Objekt-Positionen mit dem gleichen Sensor-Objektabstand. Man kann diesen Sensor-Objektabstand auch als Radius eines Kreises betrachten und den Kreis als die Kurve auf dem sich ein, aber auch beliebig viele Objekte befinden können. Dieser Halbkreis soll deshalb als Anwesenheitskurve DA $1_A$ und DA $1_B$ bzw. DA $2_A$ und DA $2_B$ (vgl. Figur 3) bezeichnet werden.

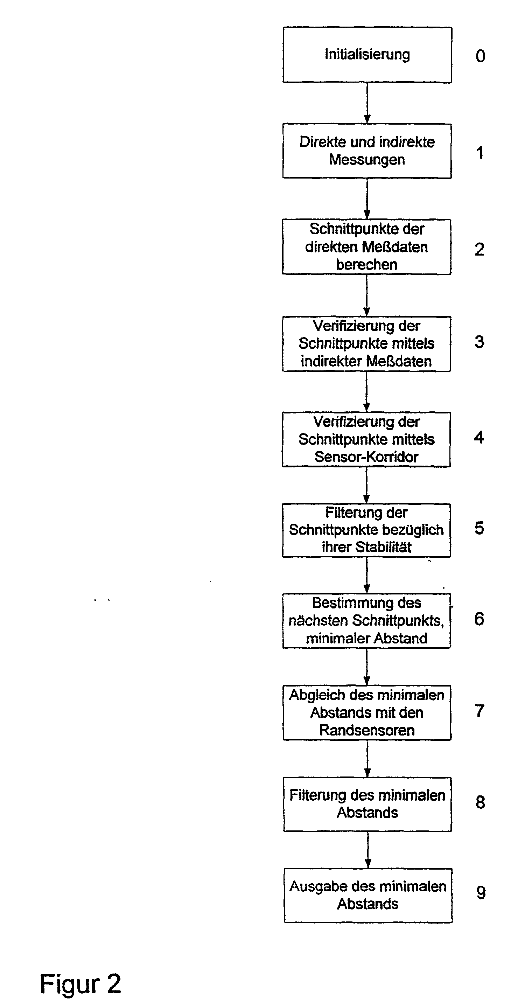

Das erfindungsgemäße Verfahren soll nun anhand der Figuren 2 und 3 für zwei Sensoren erläutert werden.

Vor Beginn der eigentlichen Messung muß jeder Ultraschallsensor mindestens ein Signal gesendet haben. Dies erfolgt in einer Initialisierungsphase 0.

In der eigentlichen Meßphase 1 werden die Sensoren 1, 2, 3, 4 für direkte und indirekte Messungen zyklisch von der Steuereinheit 7 angesteuert und abgetastet. Das heißt, Sensor 1 gibt ein Ultraschallsignal ab, was einmal vom Objekt A und außerdem vom Objekt B reflektiert wird. Die Echos werden vom Sensor 1 empfangen. Aufgrund der unterschiedlichen Laufzeiten der Signale - vom Sensor 1 zum Objekt A bzw. vom Sensor 1 zum Objekt B und wieder zurück - berechnet die Steuereinheit 7 für jedes Objekt A und B einen Abstand zum Sensor 1, der im Speicher 10 abgespeichert wird. Alle mit diesem Abstand möglichen Positionen des Objektes A sind durch die Anwesenheitskurve DA $1_A$ gekennzeichnet. Für das Objekt B ergeben sich alle möglichen Positionen zum Sensor 1 entsprechend der Anwesenheitskurve DA $1_B$.

Die Aussendung und der Empfang des Signals von ein und demselben Sensor soll im weiteren als direkte Messung bezeichnet werden.

Dieselbe direkte Messung erfolgt mit dem Sensor 2, wobei der Sensor 2 sowohl das Signal aussendet als auch die reflektierten Signale empfängt. Aus dieser Messung ergeben sich für das Objekt A Position zum Sensor 2, welche auf der direkten Anwesenheitskurve DA $2_A$ liegen. Die Positionen des Objektes B liegen auf der Umhüllungskurve DA $2_B$. Diese Kurven sind im Speicher 11 des Steuergerätes 7 abgespeichert.

Gleichzeitig mit der direkten Messung erfolgen immer indirekte Messungen.

Für den Sensor 2, der bei Aussendung des Signals vom Sensor 1 nur das reflektierte Signal empfängt, ergeben sich aufgrund der indirekten Messung die Anwesenheitskurven $IA_A$ und $IA_B$, die im folgenden erläutert werden sollen.

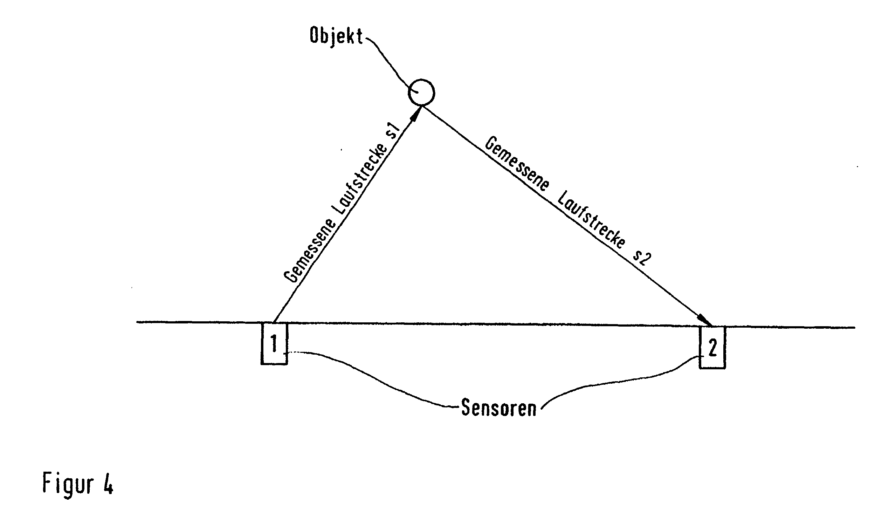

Bei der indirekten Messung sendet ein Sensor, während ein zweiter Sensor das Ultraschallsignal nach der Reflektion durch ein Objekt empfängt. Die Messung ist also keine Abstandsmessung, sondern es wird die Strekke, die das Ultraschallsignal vom Sensor 1 zum Objekt und weiter zu Sensor 2 zurücklegt ermittelt (Figur 4). Die Laufstrecke ergibt sich aus der Gleichung

$$s = c \times t$$

wobei c auch hier die Schallgeschwindigkeit mit 343 m/s bei 20° C darstellt.

Es wird also die Strecke, die das Signal vom Sensor 1 zum Objekt A und weiter vom Objekt A zum Sensor 2 zurücklegt, ermittelt. Werden alle diese Positionen aufgetragen, ergibt sich eine elliptische Anwesenheitskurve, wie sie in Figur 3 als $IA_A$ und $IA_B$ dargestellt ist.

Nach Schritt 2 der Figur 2 werden die durch die direkte Messung der Sensoren 1 und 2 ermittelten Anwesenheitskurven DA $1_A$ und DA $2_A$ bzw. DA $1_B$ und DA $2_B$ verglichen, um gemeinsame Positionen der Objekte festzustellen. Dies erfolgt durch Bestimmung der Schnittpunkte der Anwesenheitskurven. Wie aus Figur 3 ersichtlich, ergeben sich aber neben den realen Objekten A und B, dabei auch noch imaginäre Objekte D und C. Im Schritt 3 werden diese Schnittpunkte durch die Kurven $IA_A$ und $IA_B$, die durch die indirekte Messung des Sensors 2 bzw. 1 gewonnen werden, verifiziert. Nur die Schnittpunkte der direkten Messungen, an denen sich auch reale Objekte befinden, werden von der Anwesenheitskurve $IA_A$ bzw. $IA_B$ der indirekten Messung durchlaufen.

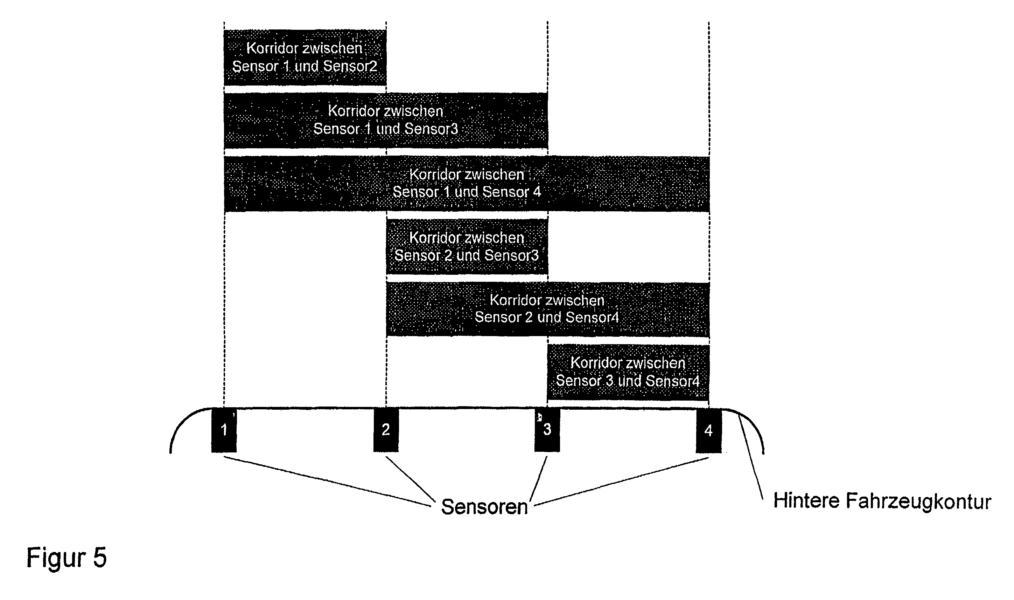

Nach Schritt 4 wird entschieden, ob sich das so festgestellte Objekt A bzw. B auch in einem Sensorkorridor zwischen den an der Schnittpunktbildung beteiligten Sensoren befindet. Dieser Sensorkorridor erstreckt sich senkrecht in der vollen Breite des Abstandes der Sensoren in Richtung Hindernis. Dies ist in Figur 5 für die verwendeten vier Sensoren 1, 2, 3, 4 dargestellt. Das im Zusammenhang mit Figur 3 erläuterte Messverfahren wird bei den vier Sensoren 1, 2, 3, 4 immer so durchgeführt, daß die beschriebene direkte und indirekte Messung immer paarweise erfolgt. Da die direkte Messung jedes Sensors mit den aller anderen geschnitten werden, ergeben sich sechs mögliche Kombinationen von Sensoren:

    Sensor 1 - Sensor 2
    Sensor 1 - Sensor 3
    Sensor 1 - Sensor 4
    Sensor 2 - Sensor 3
    Sensor 2 - Sensor 4
    Sensor 3 - Sensor 4

Dabei wird jeweils berücksichtigt, daß bei einem Sensorpaar die indirekten Messungen von links nach rechts und von rechts nach links laufen können. Unabhängig davon gilt immer der gleiche Korridor. Somit ergeben sich auch sechs mögliche Korridore, die sich in der Breite unterscheiden können.

Die Steuereinheit 7 speichert alle Impulse, die in einer maximalen Messzeit empfangen werden. Diese maximale Messzeit ergibt sich aus dem maximalen vom Sender erfaßbaren Abstand, üblicherweise beträgt dieser 2 m.

Die im beschriebenen Messverfahren ermittelten Objekte, werden im Schritt 5 (Figur 2) hinsichtlich ihrer Stabilität gefiltert. Es werden nur Objekte weiterbearbeitet, die bei mehrfacher Messung auch immer erfaßt werden. Die erfaßten Objekte werden in einem zweidimensionalen Koordinationssystem abgespeichert, bei welchen die X-Achse parallel zur hinteren Fahrzeugkontur verläuft und die Y-Achse senkrecht dazu den Abstand des Objektes zum Fahrzeug charakterisiert. Im Schritt 6 wird aus allen als real erfaßten Objekten das Objekt mit dem kleinsten Abstand festgelegt und der Abstand berechnet.

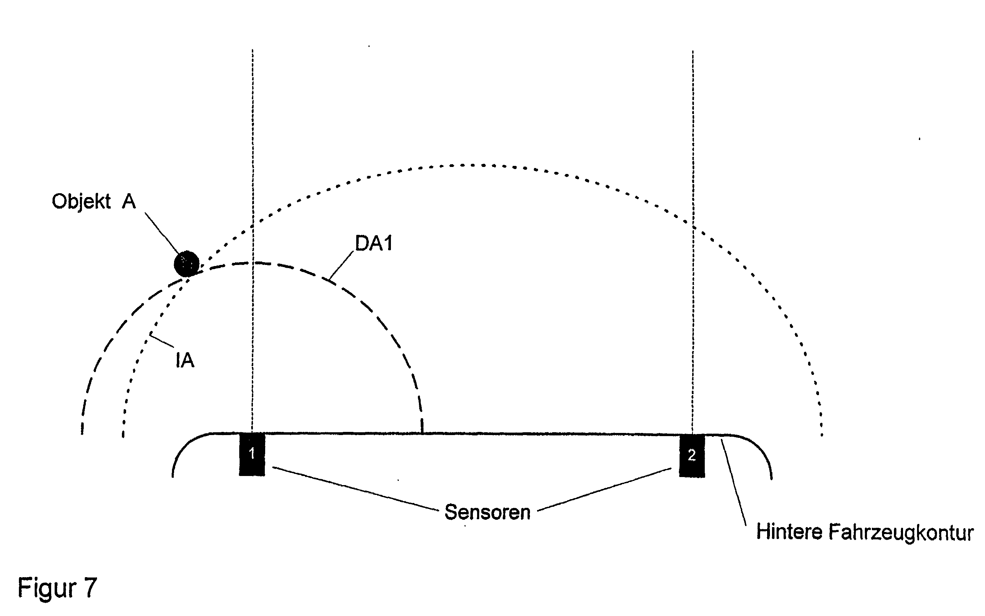

Gemäß Schritt 7 werden jeweils die Bereiche der sich am Rand des Fahrzeuges angeordneten Sensoren 1, 4 betrachtet. Bedingt durch die Sensorkorridore sind die Bereiche jenseits der Randsensoren nicht abgedeckt. Bei der Betrachtung der Anwesenheitskurven der direkten Messung bei den Randsensoren z.B. Sensor 1 läßt sich beobachten, daß diese genau der Fahrzeugkontur folgen. Daraus folgt, daß die äußeren Bereiche durch die direkten Messungen der Randsensoren vollständig erfaßt werden. Es muß daher nur der direkte Abstand des dem Randsensor 1 bzw. 4 nächsten Objektes mit dem berechneten minimalem Abstand verglichen werden. Der kleinere dieser Werte ist dann der gültige minimale Abstand. Auch in diesem Fall läßt die direkte Messung mit Hilfe des Randsensors 1 bzw. 4 nur eine Aussage darüber zu, wieweit weg sich ein Objekt befindet. Eine präzise Aussage über die Objektposition ist nur möglich, wenn durch den unmittelbar neben dem Randsensor 1 angeordneten Sensor 2 eine indirekte Messung IA durchgeführt wird (Figur 7).

Der minimale Abstand wird durch gleitende Mittelwertbildung gefiltert (Schritt 8) und im Schritt 9 an die Anzeigeeinrichtung 12 in Figur 1 ausgegeben. Diese Anzeigevorrichtung ist üblicherweise ein Lautsprecher, der bei Annäherung des Kraftfahrzeuges an ein Hindernis einen Hupton abgibt.

**Patentansprüche**

1. Verfahren zur Bestimmung des senkrechten Abstandes zwischen einem Objekt und einer sich örtlich verändernden Einrichtung, insbesondere eines Kraftfahrzeuges, bei welchem ein an dieser Einrichtung angeordneter erster Sensor ein Signal abgibt, welches von dem Objekt reflektiert wird und dieses reflektierte Signal von diesem ersten Sensor empfangen wird, wobei aus der Laufzeit des Signals von der Aussendung bis zum Empfang durch den ersten Sensor der Abstand zwischen dem ersten Sensor und dem Objekt bestimmt wird, daß mit Hilfe dieses Abstandes alle möglichen Positionen des Objektes zum ersten Sensor ermittelt werden, weiterhin das vom Objekt reflektierte Signal von einem zweiten, ebenfalls an der sich örtlich verändernden Einrichtung angeordneten Sensor empfangen wird und aus der Laufzeit des Signals vom ersten zum zweiten Sensor eine Strecke vom ersten Sensor zum Objekt und von diesem zum zweiten Sensor ermittelt wird, aus welcher alle möglichen Positionen des Objektes zum zweiten Sensor bestimmt werden, anschließend die vom ersten und zweiten Sensor mit dem gleichen Abstand ermittelten Positionen miteinander verglichen werden und für die Position des Objektes, die sowohl vom ersten als auch vom zweiten Sensor erfaßt werden, der senkrechte Abstand zur sich örtlich verändernden Einrichtung bestimmt wird, **dadurch gekennzeichnet, daß** der Abstand zwischen Objekt und der sich örtlich verändernden Einrichtung nur dann bestimmt wird, wenn sich das Objekt in einen Sensorkorridor befindet, welches zwischen dem ersten und dem zweiten Sensor aufgespannt ist.

2. Verfahren nach Anspruch 1 **dadurch gekennzeichnet, daß** der zweite Sensor ein Signal aussendet und das vom Objekt reflektierte Signal empfängt, aus welchem die möglichen Positionen des Objektes zum zweiten Sensor ermittelt werden.

3. Verfahren nach Anspruch 2 **dadurch gekennzeichnet, daß** ein Sender ein Signal aussendet und alle vorhandenen Sender das vom Objekt reflektierte Signal empfangen.

4. Verfahren nach Anspruch 1 oder 3 **dadurch gekennzeichnet, daß** der senkrechte Abstand des Objektes von der sich örtlich verändernden Einrichtung für alle die Positionen des Objektes bestimmt wird, die sowohl mit der direkten Messung des ersten Sensors als auch mit der direkten und indirekten Messung des zweiten Sensors erfaßt werden und/oder umgekehrt.

5. Verfahren nach einem der vorhergehenden Ansprüche **dadurch gekennzeichnet, daß** bei Anwesenheit mehrerer Sensoren an der sich örtlich verändernden Einrichtung, die direkten und indirekten Messungen immer von zwei Sensoren durchgeführt werden und die ermittelten Positionen miteinander verglichen werden.

6. Verfahren nach Anspruch 1 und 5 **dadurch gekennzeichnet, daß** der Sensorkorridor zwischen den die aktuellen Messungen ausführenden Sensoren aufgespannt wird.

7. Verfahren nach Anspruch 5 **dadurch gekennzeichnet, daß** bei der Erfassung von mehreren Objekten mit unterschiedlichen Abständen zu der sich örtlich ändernden Einrichtung das Objekt mit dem minimalen Abstand erfaßt wird.

8. Verfahren nach Anspruch 6 **dadurch gekennzeichnet, daß** der minimale Abstand des Objektes mit dem minimalen direkten Abstand des von einem Randsensor erfaßten Objektes verglichen wird und der kleinere dieser beiden Abstände als der minimale Abstand zum nächsten Objekt bestimmt wird.

9. Verfahren nach einem der vorhergehenden Ansprüche **dadurch gekennzeichnet, daß** jede Laufzeitmessung mehrfach durchgeführt wird und ein erfaßtes Objekt nur dann weiter betrachtet wird, wenn es bei allen Messungen erfaßt wurde.

10. Verfahren nach einem der Ansprüche 5 bis 9 **dadurch gekennzeichnet, daß** vor einer ersten Bestimmung der indirekten Anwesenheitspositionen alle Sensoren mindestens einmal ein Signal ausgesendet haben.

## Claims

1. Method for determining the vertical distance between an object and a device with a variable position, in particular a motor vehicle, in which a first sensor arranged on this device outputs a signal which is reflected by the object and this reflected signal is received by this first sensor, in which method the distance between the first sensor and the object is determined from the transit time of the signal from its transmission up to its reception by the first sensor, all possible positions of the object in relation to the first sensor are determined using this distance, in addition the signal reflected by the object is received by a second sensor which is also arranged on the device with a variable position and a path from the first sensor to the object and from the latter to the second sensor is determined from the transit time of the signal from the first sensor to the second sensor, from which path all the possible positions of the object in relation to the second sensor are determined, the positions determined with the same distance by the first and second sensors are then compared with one another and the vertical distance to the device with a variable position is determined for the positions of the object which are sensed both by the first and by the second sensor, **characterized in that** the distance between the object and the device with a variable position is determined only if the object is located in a sensor corridor extending between the first and second sensors.

2. Method according to Claim 1, **characterized in that** the second sensor outputs a signal and receives the signal which is reflected by the object and from which the possible positions of the object in relation to the second sensor are determined.

3. Method according to Claim 2, **characterized in that** a transmitter outputs a signal and all the transmitters present receive the signal reflected by the object.

4. Method according to Claim 1 or 3, **characterized in that** the vertical distance between the object and the device with a variable position is determined for all the positions of the object, which positions are sensed both with the direct measurement of the first sensor and with the direct and indirect measurement of the second sensor, and/or vice versa.

5. Method according to one of the preceding claims, **characterized in that** when a plurality of sensors are present on the device with a variable position, the direct and indirect measurements are always carried out by two sensors and the positions which are determined are compared with one another.

6. Method according to Claims 1 and 5, **characterized in that** the sensor corridor extends between the sensors which carry out the measurements at a given time.

7. Method according to Claim 5, **characterized in that** when a plurality of objects are sensed with different distances in relation to the device with a variable position, the object with the minimum distance is sensed.

8. Method according to Claim 6, **characterized in that** the minimum distance to the object is compared with the minimum direct distance to the object sensed by an edge sensor, and the smaller of these two distances is determined as the minimum distance in relation to the nearest object.

9. Method according to one of the preceding claims, **characterized in that** each transit time measurement is carried out repeatedly and a sensed object continues to be considered only if it has been sensed in all the measurements.

10. Method according to one of Claims 5 to 9, **characterized in that** all the sensors will have output a signal at least once before a first determination of the indirect presence positions.

## Revendications

1. Procédé de détermination de l'écart vertical entre un objet et un dispositif à position variable, en particulier d'un véhicule automobile, dans lequel un premier capteur disposé sur ce dispositif délivre un signal qui est réfléchi par l'objet et ce signal réfléchi est reçu par ce premier capteur, la durée de propagation du signal de l'émission jusqu'à la réception par le premier capteur déterminant l'écart entre le premier capteur et l'objet, cette distance établissant toutes les positions possibles de l'objet par rapport au premier capteur, le signal réfléchi par l'objet étant de plus reçu par un second capteur également disposé sur le dispositif à position variable, et établissant à partir de la durée de propagation du signal du premier au second capteur, un trajet du premier capteur à l'objet et de celui-ci au second capteur, déterminant toutes les positions possibles de l'objet par rapport au second capteur, comparant ensuite entre elles les positions établies avec le même écart à partir du premier et second capteur et déterminant l'écart vertical par rapport au dispositif à position variable en fonction de la position de l'objet enregistrée aussi bien par le premier que par le second capteur, **caractérisé en ce que** l'écart entre l'objet et le dispositif à position variable n'est déterminé que quand l'objet se trouve dans un couloir de capteur qui se déploie du premier au second capteur.

2. Procédé selon la revendication 1, **caractérisé en ce que** le second capteur émet un signal et reçoit le signal réfléchi par l'objet, à partir duquel on établit les positions possibles de l'objet par rapport au second capteur.

3. Procédé selon la revendication 2, **caractérisé en ce qu'**un émetteur émet un signal et tous les émetteurs disponibles reçoivent le signal réfléchi par l'objet.

4. Procédé selon la revendication 1 ou 3, **caractérisé en ce que** l'écart vertical de l'objet au dispositif à position variable est déterminé pour toutes les positions de l'objet qui sont enregistrées aussi bien par la mesure directe du premier capteur que par la mesure directe et indirecte du second capteur et/ou inversement.

5. Procédé selon l'une des revendications précédentes, **caractérisé en ce que**, lors de la présence de plusieurs capteurs sur le dispositif à position variable, les mesures directes et indirectes sont toujours assurées par deux capteurs et les positions établies sont comparées entre elles.

6. Procédé selon la revendication 1 et 5, **caractérisé en ce que** le couloir de capteur se déploie entre les capteurs assurant les mesures courantes.

7. Procédé selon la revendication 5, **caractérisé en ce que**, lors de l'enregistrement de plusieurs objets avec des écarts divers au dispositif à position variable, on enregistre l'objet ayant l'écart minimum.

8. Procédé selon la revendication 6, **caractérisé en ce que** l'écart minimum de l'objet est comparé à l'écart direct minimum de l'objet enregistré par un capteur périphérique et le plus petit de ces deux écarts est déterminé comme écart minimum à l'objet le plus proche.

9. Procédé selon l'une des revendications précédentes, **caractérisé en ce que** chaque mesure de la durée de propagation est réalisée plusieurs fois et un objet enregistré n'est considéré dans la suite que lorsqu'il a été enregistré lors de toutes les mesures.

10. Procédé selon une des revendications 5 à 9, **caractérisé en ce qu'**avant une première détermination des positions de présence indirectes, tous les capteurs ont émis un signal au moins une fois.

Figur 1

EP 0 970 390 B1

| | |
|---|---|
| Initialisierung | 0 |
| Direkte und indirekte Messungen | 1 |
| Schnittpunkte der direkten Meßdaten berechen | 2 |
| Verifizierung der Schnittpunkte mittels indirekter Meßdaten | 3 |
| Verifizierung der Schnittpunkte mittels Sensor-Korridor | 4 |
| Filterung der Schnittpunkte bezüglich ihrer Stabilität | 5 |
| Bestimmung des nächsten Schnittpunkts, minimaler Abstand | 6 |
| Abgleich des minimalen Abstands mit den Randsensoren | 7 |
| Filterung des minimalen Abstands | 8 |
| Ausgabe des minimalen Abstands | 9 |

# Figur 2

Figur 3

EP 0 970 390 B1

Objekt

Gemessene Laufstrecke s1

Gemessene Laufstrecke s2

1

2

Sensoren

Figur 4

EP 0 970 390 B1

EP 0 970 390 B1

Korridor zwischen
Sensor 1 und Sensor2

Korridor zwischen
Sensor 1 und Sensor3

Korridor zwischen
Sensor 1 und Sensor 4

Korridor zwischen
Sensor 2 und Sensor3

Korridor zwischen
Sensor 2 und Sensor4

Korridor zwischen
Sensor 3 und Sensor4

1  2  3  4

Sensoren

Hintere Fahrzeugkontur

Figur 5

Figur 6

Objekt A

Objekt B

Gemessene
Entfernung
Sensor 1
Objekt A

Berechneter Abstand
Objekt B zum Fahrzeug

1  2  3  4

Sensoren

Hintere Fahrzeugkontur

EP 0 970 390 B1

Objekt A

DA1

IA

Sensoren

Hintere Fahrzeugkontur

1

2

Figur 7